# EUROPEAN PATENT APPLICATION

(11) **EP 2 267 821 A2**
(43) Date of publication of application: **29.12.2010**
(21) Application number: 10166833.3
(22) Date of filing: 22.06.2010
(51) Int. Cl.: H01M 2/20, H01M 10/50

(54) **Power supply apparatus**

(30) Priority: 23.06.2009 JP 2009148809
(71) Applicant: Toyota Jidosha Kabushiki Kaisha, Toyota-shi, Aichi 471-8571 (JP); Yazaki Corporation, Minato-ku Tokyo 108-8333 (JP)
(72) Inventor: Kosaki, Akihiro, Toyota-shi, Aichi 471-8571 (JP); Iida, Kenji, Toyota-shi, Aichi 471-8571 (JP); Iwabe, Masaaki, Makinohara-shi, Shizuoka 421-0407 (JP); Ichikawa, Yoshiaki, Makinohara-shi, Shizuoka 421-0407 (JP); Ikeda, Tomohiro, Makinohara-shi, Shizuoka 421-0407 (JP)
(74) Representative: TBK-Patent

(57) **Abstract**

A power supply apparatus is equipped with a service plug (40) composed of a fixation portion (42) and a disconnection portion (50). The fixation portion (42) is attached to a case (22) and has conductive plates (44) directly connected to connection terminals of predetermined two adjacent cells (34) of an assembled battery (30) respectively. The disconnection portion (50) is attached/removed to/from the fixation portion (42) to thereby electrically connect/disconnect the conductive plates (44) to/from each other.

## Description

### BACKGROUND OF THE INVENTION

### 1. Field of the Invention

The invention relates to a power supply apparatus.

### 2. Description of the Related Art

Japanese Patent Application Publication No. 9-265874 (JP-A-9-265874) describes a power supply apparatus that has an electric wire drawn out from a power electric line of a vehicle and an attachment body attached to a terminal end of the electric wire. In the described power supply apparatus, the power electric line of the vehicle may be electrically connected/disconnected by attaching/removing a conductor having a handle portion to/from the attachment body. Thus, during repair, inspection, or the like of the vehicle, safety may be ensured by electrically disconnecting the power electric line.

However, in the above power supply apparatus, the electric wire is drawn out from the power electric line. Therefore, a space for the electric wire thus drawn out is required, and it is also necessary to ensure that the electric wire be insulated from a case or the like. Further, when the electric wire is drawn out from the power electric line, the copper loss in the power supply apparatus may be increased, and the influence of noise generated from the electric wire may be increased.

### SUMMARY OF THE INVENTION

The invention provides a power supply apparatus that further suppresses an electric loss and allows size reduction by more reliably electrically disconnecting two cells, from a plurality of cells that are connected in series to one another in an assembled battery.

A first aspect of the invention relates to a power supply apparatus. The power supply apparatus includes an assembled battery in which a plurality of cells are connected in series to one another; a case that accommodates the assembled battery; a connecting mechanism that is attached to an outside of the case, wherein the connecting mechanism connects two selected cells of the plurality of cells in series. The connecting mechanism includes a fixation portion and a disconnection portion. The fixation portion includes a first conductive plate that is directly connected to a positive electrode terminal of one of the two selected cells, and a second conductive plate that is directly connected to a negative electrode terminal of the other of the two selected cells, wherein the fixation portion is attached to the case. The disconnection portion is removable from the fixation portion, electrically connects the first conductive plate to the second conductive plate when attached to the fixation portion, and electrically disconnects the first conductive plate from the second conductive plate when removed from the fixation portion.

In the power supply apparatus, by removing the disconnection portion from the fixation portion, the predetermined two of the plurality of the cells may be more reliably electrically disconnected from each other. As a result, safety can be ensured during operation or inspection. Further, because the conductive plates of the fixation portion are directly connected to the two selected cells of the assembled battery respectively, the copper loss of the power supply apparatus can be reduced to further suppress an electric loss in comparison with a power supply apparatus having cells from which electric wires are drawn out. Because it is not necessary to provide space for the electric wires, the power supply apparatus can be reduced in size. It should be noted that "the two selected cells" may be selected so that the cells connected to the first conductive plate side are approximately equal in number to the cells connected to the second conductive plate side.

The assembled battery may be formed such that the positive electrode terminal and negative electrode terminal of the two selected cells are located on the same lateral face of the assembled battery. The fixation portion may be attached to the case near the upper portions of the two selected cells. The first conductive plate and the second conductive plate may be formed in a stepped shape. Thus, the conductive plates can be more easily reduced in length. As a result, the suppression of an electric loss in the power supply apparatus and the size reduction thereof can be more easily achieved. Further, the power supply apparatus may include a cooling device that inducts a coolant to the plurality of the cells through an induction port provided in the case to cool the assembled battery, and the fixation portion may be attached to the case near the induction port.

The two selected cells may be adjacent each other.

Further, the positive electrode terminal and negative electrode terminal of the two selected cells may be provided on the same lateral face of the assembled battery. The fixation portion may be provided on a lateral face of the case that is perpendicular to the lateral face in which the positive electrode terminal and the negative electrode terminal are provided. The first conductive plate and the second conductive plate may be formed in a cranked shape. Thus, the conductive plates can be more easily reduced in length especially, for example, in the case where the two selected cells are located in the vicinity of an end of the assembled battery. As a result, the suppression of an electric loss in the power supply apparatus and the size reduction thereof can be more easily achieved.

Further, the disconnection portion may include a rotatable grip.

The number of cells connected to the first conductive plate may be approximately equal to the number of cells that are connected to the second conductive plate.

### BRIEF DESCRIPTION OF THE DRAWINGS

The foregoing and further features and advantages of the invention will become apparent from the following description of an example embodiment of the invention with reference to the accompanying drawings, wherein like numerals are used to represent like elements and wherein:
FIG. 1 is a perspective view showing the structure of a power supply apparatus according to the embodiment of the invention;
FIG. 2 is a circuit diagram showing the electric connection between an assembled battery and a service plug in the power supply apparatus of FIG. 1;
FIG. 3 is an enlarged perspective view of a fixation portion of FIG. 1;
FIG. 4 is an exploded perspective view of the service plug;
FIG. 5 is a cross-sectional view showing how a conductive plate is connected to the assembled battery; and
FIG. 6 is a perspective view showing the exterior of a power supply apparatus according to a modified example of the embodiment of the invention.

### DETAILED DESCRIPTION OF EMBODIMENT

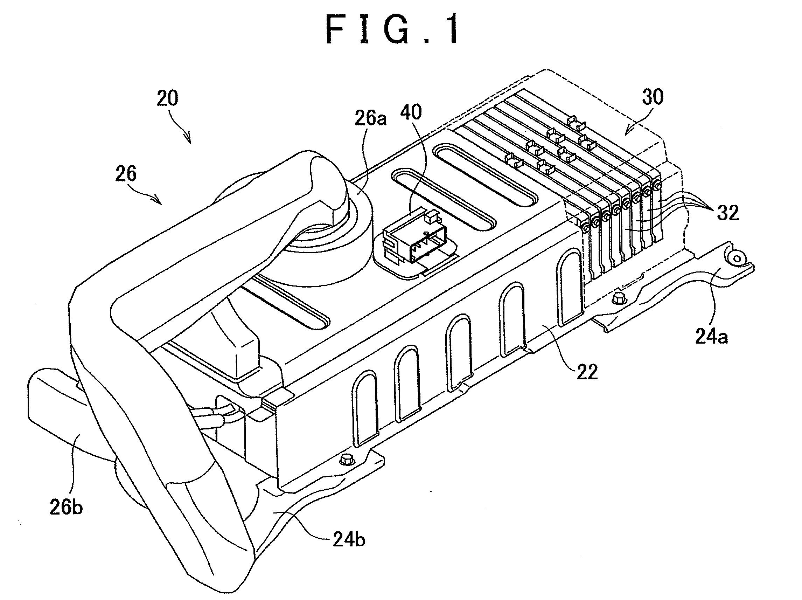

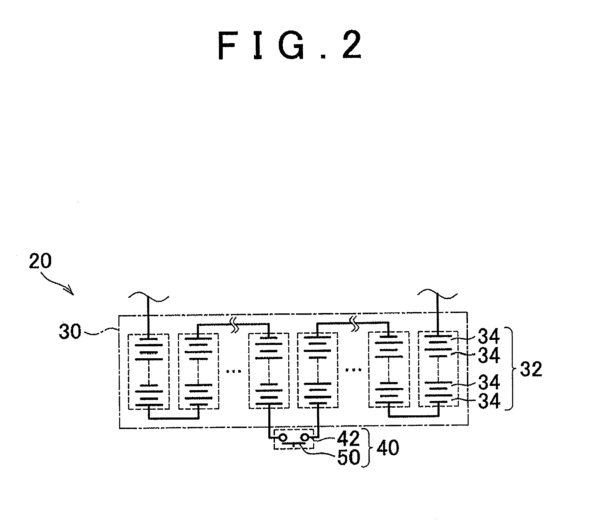

FIG. 1 is a perspective view showing the structure of a power supply apparatus 20 according to the embodiment of the invention. FIG. 2 is a circuit diagram showing the electrical connection between an assembled battery 30 and a service plug 40 in the power supply apparatus 20 of FIG. 1. It should be noted in FIG. 1 that a case 22 and the assembled battery 30 inside the case 22 are indicated by broken lines and solid lines, respectively, as to a certain region (an upper right region in FIG. 1) of the power supply apparatus 20 to facilitate understanding of the invention. As shown in FIGS. 1 and 2, the power supply apparatus 20 according to the embodiment of the invention includes the assembled battery 30, the case 22, a cooling machine 26, and the service plug 40. The assembled battery 30 is composed of a plurality of cells 34 connected in series to one another. The case 22 accommodates the assembled battery 30. The cooling device 26 is attached to the case 22 to cool the assembled battery 30. The service plug 40 may be electrically connect/disconnect two adjacent ones of the cells 34 of the assembled battery 30.

The assembled battery 30 is constructed by connecting a plurality of modules 32, which are each composed of a plurality of the cells 34 connected in series, in series. The cells 34 may be nickel hydride batteries, lithium ion batteries, or the like. The assembled battery 30 is formed by arranging the modules 32 so that connection terminals at both ends of each module 32 are located on lateral faces of the assembled battery 30, and that the connection terminals of adjacent modules 32 (connection terminals of the cells 34) are different in polarity from each other, namely, that positive terminals and negative terminals are alternately arranged on each of the lateral faces of the assembled battery 30. The plurality of the modules 32 are connected in series to one another by electrically connecting the connection terminals of the adjacent modules 32 to each other.

The case 22 is supported by support members 24a and 24b, and is attached to, for example, a mount or the like provided in a vehicle (not shown). The cooling device 26 has an inductor 26a and a discharge port 26b that are provided through an upper face of the case 22 and a lateral face of the case 22, respectively. The cooling device 26 drives a cooling fan (not shown) provided in the inductor 26a on the upper face of the case 22 to thereby induct a coolant, such as outside air, air in the vehicle, or the like from the inductor 26a into the case 22 and discharge the coolant from the discharge port 26b, thus making it possible to cool the assembled battery 30.

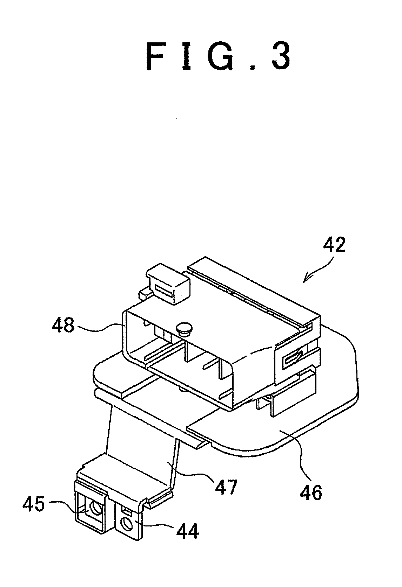

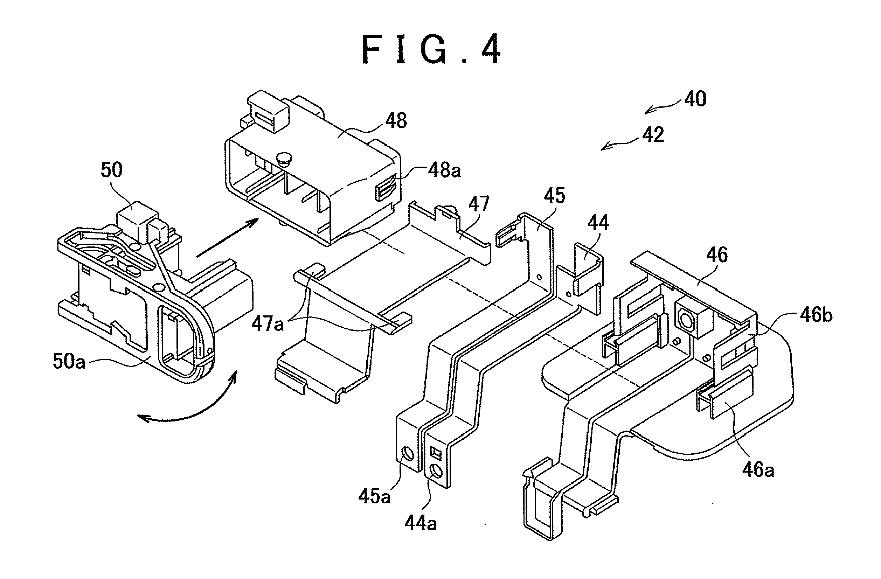

The service plug 40 includes a fixation portion 42 attached to the upper face of the case 22 near the inductor 26a of the cooling device 26, and a disconnection portion 50 that may be removably engaged with the fixation portion 42. FIG. 3 is an enlarged perspective view of the fixation portion 42 of FIG. 1. FIG. 4 is an exploded perspective view of the service plug 40. As shown in FIGS. 3 and 4, the fixation portion 42 is composed of conductive plates 44 and 45 formed by punching and bending plate members made of a highly conductive material (e.g., copper or the like); a base 46 that supports the conductive plates 44 and 45; a cover 47 that covers the conductive plates 44 and 45; and a insertion receiver 48 to which the disconnection portion 50 is attached. Holes 44a and 45a, into which the connection terminals of the modules 32 (the connection terminals of the cells 34) are inserted, formed at the ends of each respective conductive plates44 and 45. From those faces of the conductive plates 44 and 45 through which the fitting insertion holes 44a and 45a are formed, the conductive plates 44 and 45 are bent at a right angle a plurality of times to be formed in a stepped shape that extends along the contour of the case 22. The base 46, the cover 47, and the insertion receiver 48 are each formed of an insulating material, and may be formed by, for example, injecting a resin or the like into a mold form. Then, with the conductive plates 44 and 45 laid on the base 46, a convex portion 47a of the cover 47 is fitted into a predetermined region of the base 46. The conductive plates 44 and 45 and the cover 47 are thereby attached to the base 46. A rail (not shown) provided on a bottom portion of the insertion receiver 48 is inserted into a guard 46a of the base 46, and a pawl 48a provided on a lateral face of the insertion receiver 48 is fitted into a pawl receiving portion 46b of the base 46. The insertion receiver 48 is thus attached to the base 46 to form the fixation portion 42.

The disconnection portion 50 is formed by covering a conductor (not shown) made of a highly conductive material (e.g., copper or the like), with an insulator (e.g., resin or the like). The disconnection portion 50 is formed such that the conductive plates 44 and 45 are electrically connected to each other by the conductor when the disconnection portion 50 is attached to the insertion receiver 48 of the fixation portion 42. That is, the disconnection portion 50 is formed such that the conductive plates 44 and 45 are electrically connected to each other by attaching the disconnection portion 50 to the fixation portion 42, and that the conductive plates 44 and 45 can be electrically disconnected from each other by removing the disconnection portion 50 from the fixation portion 42. Further, a grip 50a that may be turned 90° in the directions indicated by the arrow in FIG. 4 is attached to the disconnection portion 50. The grip 50a is formed such that the disconnection portion 50 may be removed from the fixation portion 42 when the grip 50a is turned by 90° and pulled. In addition, the disconnection portion 50 includes a fuse (not shown) that may be replaced by removing the disconnection portion 50 from the fixation portion 42.

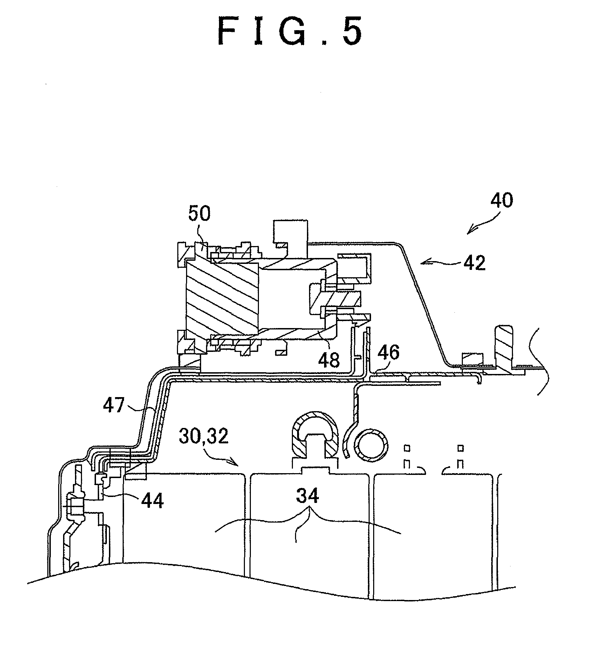

Next, the connection between the service plug 40 and the assembled battery 30 will be described. FIG. 5 is a cross-sectional view showing a cross-section of the connection area between the conductive plate 44 and the assembled battery 30 with the fixation portion 42 attached to the case 22. The connection area between the conductive plate 45 and the assembled battery 30 has a similar cross-section. As shown in FIG. 5, the fixation portion 42 of the service plug 40 is attached to the case 22 by fastening the base 46 to the case 22 with the aid of bolts (not shown) at positions where the connection terminals of the module 32 (the connection terminals of the cell 34) are inserted into the insertion holes 44a and 45a of the conductive plates 44 and 45, respectively. Thus, the fixation portion 42 is attached to the outside of the case 22 above the cells 34 that are connected to the conductive plates 44 and 45. The conductive plates 44 and 45 are directly connected to the respective connection terminals of the adjacent modules 32 of the assembled battery 30 which are adjacent thereto respectively, and the positive electrode side terminals and the negative electrode side terminals are alternately arranged on each of the lateral faces of the assembled battery 30 as described above. Therefore, the conductive plates 44 and 45 are connected to the positive electrode terminal of one of the two adjacent cells 34 and the negative electrode terminal of the other, respectively. The conductor plates 44 and 45 are not electrically connected to each other when the disconnection portion 50 is removed from the fixation portion 42. Therefore, the two adjacent cells 34 to which the conductor plates 44 and 45 are connected respectively are electrically disconnected from each other, and the circuit to which the assembled battery 30 is connected does not form a closed circuit. However, except for the cells 34 to which the fixation portion 42 is connected, the cells 34 of the assembled battery 30 are connected in series to one another. When the disconnection portion 50 is attached to the fixation portion 42, the conductor plates 44 and 45 are electrically connected to each other, and all the cells 34 of the assembled battery 30 are connected in series to one another. With the described structure of the service plug 40, electric power may be input/output to/from the assembled battery 30 by attaching the disconnection portion 50 to the fixation portion 42, and can be prevented from being input/output to/from the assembled battery 30 by removing the disconnection portion 50 from the fixation portion 42. In particular, security is ensured during repair, inspection, or the like of the electric circuit including the assembled battery 30 by removing the disconnection portion 50 from the fixation portion 42. It should be noted that the two cells 34 to which the conductive plates 44 and 45 are connected respectively may be selected such that the cells 34 connected to the conductive plate 44 are approximately equal in number to the cells 34 connected to the conductive plate 45. In this manner, the voltage of the assembled battery 30 can be divided substantially into halves when the disconnection portion 50 is removed from the fixation portion 42. As a result, higher security can be ensured.

Further, the copper loss in the power supply apparatus 20 may be reduced to further suppress electrical losses and the influence of noise relative to power supply apparatuses in which electric wires are drawn out from the connection terminals of the cells 34, by directly connecting the conductive plates 44 and 45 to the connection terminals of the cells 34 as described above. In addition, because no space for the electric wires is required, the size of the power supply apparatus 20 may be reduced as well. Copper loss in the power supply apparatus 20 is decreased because a conductive plate generally has greater electric conductivity than an electric wire, such as a wire harness or the like. In addition, in the embodiment of the invention, the conductive plates 44 and 45 are connected to the connection terminals of the cells 34 on the lateral face of the assembled battery 30, and the fixation portion 42 is attached to the case 22, above the cells 34. Therefore, the length of the conductive plates 44 and 45 may be reduced in length, and electrical losses in the power supply apparatus 20. With the reduction in size of the conductive plates, the the size of the overall power supply apparatus 20 may also be reduced.

According to the power supply apparatus 20, the conductive plates 44 and 45 of the fixation portion 42 are directly connected to the predetermined two adjacent cells 34 of the assembled battery 30. Therefore, copper loss in the power supply apparatus 20 may be further reduced to suppress electric losses in comparison with a power supply apparatus in which electric wires are drawn out from the cells 34. Furthermore, the need to provide space for the electric wires. Thus, the size of the power supply apparatus 20 may be reduced. In addition, the conductive plates 44 and 45 are connected to the cells 34 respectively on the lateral face of the assembled battery 30, and the fixation portion 42 is attached to the case 22, above the cells 34. Therefore, the length of the conductive plates 44 and 45 may be easily reduced, and electric losses in the power supply apparatus 20 may be more easily reduced.

In the power supply apparatus 20, the fixation portion 42 of the service plug 40 is attached to the case 22 in near the induction port 26a of the cooling device 26. However, the fixation portion 42 may be attached to the case 22 at a position far from the induction port 26a.

In the power supply apparatus 20, the cooling device 26 inductoris attached to the case 22. However, the induction port 26a and the discharge port 26b may be provided at any suitable position on the case 22. Furthermore, if appropriate, the cooling device 26 thus constructed may be omitted.

In the power supply apparatus 20, the fixation portion 42 is formed by combining the conductive plates 44 and 45, the base 46, the cover 47, and the insertion receiver 48 with one another. However, each of the base 46, the cover 47, and the insertion receiver 48 may be formed of a plurality of members, and two or more of the base 46, the cover 47 may be integrally formed with the insertion receiver 48. Further, the fixation portion 42 may be integrally formed by injecting an insulating material, for example, a resin or the like with the conductive plates 44 and 45 disposed in a predetermined mold form.

Furthermore, in the power supply apparatus 20, the assembled battery 30 is formed by connecting the plurality of the modules 32, which are each composed of the plurality of the cells 34 connected in series, to one another in series. However, the assembled battery has only to be formed by connecting the plurality of the cells 34 in series to one another. That is, the assembled battery may not have the plurality of modules 32 that are each composed of the plurality of the cells 34 connected in series to one another.

In the power supply apparatus 20, the assembled battery 30 is formed by arranging the modules 32 such that the connection terminals at both the ends of the modules 32 (the connection terminals of the cells 34) are located on the lateral face of the assembled battery 30 and that the positive electrode terminals and the negative electrode terminals are arranged on opposite lateral faces of the assembled battery 30. However, the positive electrode terminals may be provided on one of the lateral faces of the assembled battery 30, and the negative electrode terminals may be located on the opposite lateral face of the assembled battery 30. Further, the connecting terminals of the cells 34 may be located on the upper face of the assembled battery 30.

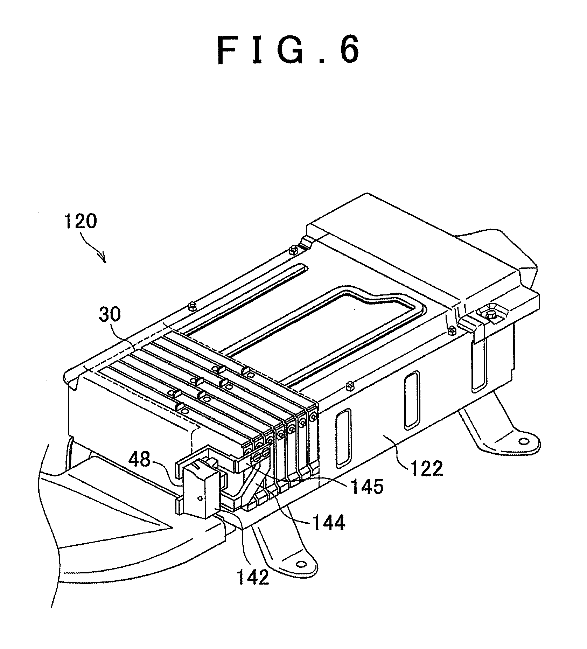

In the power supply apparatus 20, the fixation portion 42 of the service plug 40 is attached to the upper face of the case 22. However, the conductive plates of the fixation portion may be directly connected to predetermined two adjacent cells 34, and the fixation portion 42 may instead be attached to the case 22 on the lateral face of the case 22. FIG. 6 shows the outline of an exterior of a power supply apparatus 120 according to a modified example of the embodiment of the invention. It should be noted in FIG. 6 that the case 122 is not shown around the connection region between the fixation portion 142 of the service plug 140 and the assembled battery 30. In the power supply apparatus 120 according to the modified example, as shown in FIG. 6, the fixation portion 142 of the service plug 140 is attached to a lateral face of the case 122 of the assembled battery 30, and conductor plates 144 and 145 are directly connected to the connection terminals of two end modules 32 on a lateral face of the assembled battery 30. It should be noted herein that the conductive plates 144 and 145 are formed in a cranked shape so that the fixation portion 142 is attached to a different lateral face of the case 122 from that in which the connection terminals of the assembled battery 30 are provided. The structure of the assembled battery 30 is designed in the same manner as described above, and positive electrode terminals and negative electrode terminals are alternately disposed on the lateral face thereof. In this case as well, therefore, the conductor plates 144 and 145 are connected to the positive electrode terminal of one of the two adjacent cells 34 and the negative electrode terminal of the other respectively. Electric power may be input/output to/from the assembled battery 30 by attaching a disconnection portion (not shown) to the fixation portion 142, and electric power may be reliably prevented from being input/output to/from the assembled battery 30 by removing the disconnection portion from the fixation portion 142. Then, in this configuration as well, the conductor plates 144 and 145 of the fixation portion 142 are directly connected to the connection terminals of the cells 34 respectively. Therefore, the copper loss in the power supply apparatus 120 may be reduced to further suppress electrical losses in comparison with power supply apparatuses in which electric wires are drawn out from the cells 34. In addition, and there is no need to provide a space for electric wires. Therefore, the size of the power supply apparatus 120 may be reduced. In addition, in the power supply apparatus 120 according to the modified example, the conductor plates 144 and 145 are connected to the connection terminals of the two end plurality of the modules 32 of the assembled battery 30, and the fixation portion 142 is attached to the lateral face of the case 122. Therefore, the length of the conductive plates 144 and 145 is easily reduced, and the suppression of an electric loss in the power supply apparatus 120 and the size reduction thereof can be more easily achieved. It should be noted that the conductive plates 144 and 145 may be connected to connection terminals that are different from the connection terminals of the two end plurality of the modules 32 of the assembled battery 30. Further, the fixation portion may be attached to the same lateral face of the case of the assembled battery 30 on which the connection terminals of the modules 32 (the connection terminals of the cells 34) are located.

In the invention, the assembled battery 30 constructed through series connection of the plurality of the modules 32 that are each composed of the plurality of the cells 34 connected in series to one another may be regarded as "the assembled battery". The case 22 can be regarded as "the case". The service plug 40,which is composed of the fixation portion 42 having the conductor plates 44 and 45 directly connected to the positive electrode side terminal of one of the two adjacent ones of the cells 34 and the negative electrode side terminal of the other respectively and the disconnection portion 50 removable from the fixation portion 42, may be regarded as "the connecting mechanism". Further, the cooling device 26 serves as "the cooling machine". It should be noted that "the assembled battery" is not restricted to the assembled battery 30 constructed through series connection of the plurality of the modules 32 that are each composed of the plurality of the cells 34 connected in series to one another. "The assembled battery" may be designed in any manner as long as it is constructed through series connection of a plurality of cells, and for example, may dispense with the plurality of the modules. "The case" is not limited to the case 22. "The case" may be designed in any manner as long as it accommodates the assembled battery. "The connecting mechanism" is not limited to the service plug 40, which is composed of the fixation portion 42 having the conductor plates 44 and 45 directly connected to the positive electrode side terminal of one of the two adjacent ones of the cells 34 and the negative electrode side terminal of the other respectively and the disconnection portion 50 removable from the fixation portion 42. Any connecting mechanism that may be appropriately attached to the outside of the case may be used to connect the predetermined two adjacent ones of the plurality of the cells to each other in series, and is composed of a fixation portion, which has a first conductive plate directly connected to a positive electrode side terminal of one of the predetermined two cells, and a second conductive plate directly connected to a negative electrode side terminal of the other of the two selected cells and is attached to the case, and a disconnection portion, which is removable from the fixation portion, electrically connects the first conductive plate and the second conductive plate to each other when attached to the fixation portion, and electrically disconnects the first conductive plate and the second conductive plate from each other when removed from the fixation portion. "The cooling device" is not limited to the cooling device 26. Any "cooling device" may be used that inducts sufficient coolant to the plurality of the cells through the induction port provided in the case to cool the assembled battery.

The invention is available for industries of manufacturing power supply apparatuses, and the like.

While the invention has been described with reference to the example embodiment thereof, it is to be understood that the invention is not limited to the described embodiment or construction. The invention is intended to cover various modifications and equivalent arrangements. In addition, while the various elements of the disclosed invention are shown in various example combinations and configurations, other combinations and configurations, including more, less or only a single element, are also within the scope of the appended claims.
A power supply apparatus is equipped with a service plug (40) composed of a fixation portion (42) and a disconnection portion (50). The fixation portion (42) is attached to a case (22) and has conductive plates (44) directly connected to connection terminals of predetermined two adjacent cells (34) of an assembled battery (30) respectively. The disconnection portion (50) is attached/removed to/from the fixation portion (42) to thereby electrically connect/disconnect the conductive plates (44) to/from each other.

## Claims

1. A power supply apparatus comprising:
an assembled battery (30) in which a plurality of cells (34) are connected in series to one another;
a case (22) that accommodates the assembled battery; and
a connecting mechanism (40) that is attached to an outside of the case, wherein the connecting mechanism connects two selected cells of the plurality of cells in series, wherein
the connecting mechanism includes a fixation portion (42) and a disconnection portion (50),
the fixation portion includes a first conductive plate that is directly connected to a positive electrode terminal of one of the two selected cells, and a second conductive plate that is directly connected to a negative electrode terminal of the other of the two selected cells, wherein the fixation portion is attached to the case, and
the disconnection portion is removable from the fixation portion, electrically connects the first conductive plate to the second conductive plate when attached to the fixation portion, and electrically disconnects the first conductive plate from the second conductive plate when removed from the fixation portion.

2. The power supply apparatus according to claim 1, wherein
the two selected cells are adjacent each other.

3. The power supply apparatus according to claim 1 or 2, wherein
the positive electrode terminal and negative electrode terminal of the two selected cells are provided on the same lateral face of the assembled battery,
the fixation portion is attached to the case near upper portions of the two selected cells, and
the first conductive plate and the second conductive plate are formed in a cranked shape.

4. The power supply apparatus according to any one of claims 1 to 3, further comprising
a cooling device (26) that inducts coolant to the plurality of the cells through an induction port provided in the case to cool the assembled battery, wherein
the fixation portion is attached to the case near the induction port.

5. The power supply apparatus according to claim 1 or 2, wherein
the positive electrode terminal and negative electrode terminal of the two selected cells are provided on the same lateral face of the assembled battery,
the fixation portion is provided on a lateral face of the case that is perpendicular to the lateral face in which the positive electrode terminal and the negative electrode terminal are provided, and
the first conductive plate and the second conductive plate are formed in a cranked shape.

6. The power supply apparatus according to any one of claims 1 to 5, wherein
the disconnection portion includes a rotatable grip (50a).

7. The power supply apparatus according to any one of claims 1 to 6, wherein
the number of cells connected to the first conductive plate are approximately equal to the number of cells that are connected to the second conductive plate.
